# EUROPEAN PATENT APPLICATION

(11) **EP 3 663 915 A1**
(43) Date of publication of application: **10.06.2020**
(21) Application number: 19185204.5
(22) Date of filing: 09.07.2019
(51) Int. Cl.: G06F 9/48, G06F 9/50, G06N 20/00

(54) **SCHEDULING TASK GRAPH OPERATIONS**

(30) Priority: 06.12.2018 US 201816212354
(71) Applicant: FUJITSU LIMITED, Kanagawa, 211-8588 (JP)
(72) Inventor: MANDAL, Avradip, Sunnyvale, California 94085 (US); ROY, Arnab, Sunnyvale, California 94085 (US); KHANIJAU, Gagan, Irvine, CA 92612 (US)
(74) Representative: Haseltine Lake Kempner LLP

(57) **Abstract**

According to an aspect of an embodiment, a method may include obtaining a task graph that represents operations for a task. The task graph may include multiple sub-task graphs. The method may further include obtaining a first computation time to perform a subset of the operations corresponding to a set of the multiple sub-task graphs based on parallel performance of the subset of the operations. The method may further include obtaining a second computation time to perform the subset of the operations using multiple resources according to a resource schedule of the multiple resources and determining a difference between the first computation time and the second computation time. The method may further include in response to the difference satisfying a threshold, performing the operations of the task graph using the multiple resources based on the resource schedule of the multiple resources.

## Description

The embodiments discussed in the present disclosure are related to scheduling task graph operations.

### BACKGROUND

Task graphs may represent operations and the flow of data between the operations to perform a certain task. For example, a task graph may represent operations and data flows for a machine learning algorithm to generate a machine learning model. Task graphs may be used to schedule a cluster of devices, such as a cluster of servers, which may be used to perform the operations in the task graph.

The subject matter claimed in the present disclosure is not limited to embodiments that solve any disadvantages or that operate only in environments such as those described above. Rather, this background is only provided to illustrate one example technology area where some embodiments described in the present disclosure may be practiced.

### SUMMARY

According to an embodiment of one aspect of the invention, a method may include obtaining a task graph that represents operations for a task. The task graph may include multiple sub-task graphs. The method may further include obtaining a first computation time to perform a subset of the operations corresponding to a set of the multiple sub-task graphs based on parallel performance of the subset of the operations. The method may further include obtaining a second computation time to perform the subset of the operations using multiple resources according to a resource schedule of the multiple resources and determining a difference between the first computation time and the second computation time. The method may further include in response to the difference satisfying a threshold, performing the operations of the task graph using the multiple resources based on the resource schedule of the multiple resources.

Both the foregoing general description and the following detailed description are given as examples and are explanatory and are not restrictive of the invention, as claimed.

### BRIEF DESCRIPTION OF THE DRAWINGS

Example embodiments will be described and explained with additional specificity and detail through the use of the accompanying drawings in which:
FIG. 1 is a diagram representing an example environment related to scheduling task graph operations;
FIG. 2a illustrates an example task graph;
FIG. 2b illustrates an example resource graph;
FIG. 3 illustrates an example computing system that may be configured to assist in scheduling task graph operations;
FIG. 4 is a flowchart of an example method of scheduling task graph operations;
FIG. 5 is a flowchart of another example method of scheduling task graph operations; and
FIG. 6 is a flowchart of another example method of scheduling task graph operations.

### DESCRIPTION OF EMBODIMENTS

Task graphs, such as an acyclic graph of tasks, may represent operations and the flow of data between the operations to complete a particular function. For example, a task graph may represent operations and data flows for a machine learning algorithm to generate a machine learning model based on inputs and labels of the inputs. The flow of data and the arrangement of operations in a task graph may represent restrictions regarding when particular operations may begin based on the finishing of other operations. For example, a task graph may illustrate first and second operations and model a relationship between the first and second operations based on the first operation generating data that a second operation may use. As a result, the second operation may not begin until after the first operation is complete.

In some circumstances, task graphs may be very large and include multiple operations. As a result, having a single device perform the operations of the task graph in some situations may result in the performance of the operations being too slow. In some embodiments, to decrease the time to perform the operations of a task graph, the operations may be spread across multiple different resources. In these and other embodiments, the operations may be scheduled across the resources based on the availability of the resources and the flow of the task graph. Determining a schedule for resources to process the operations of a task graph may be a nondeterministic polynomial time (NP)-complete problem. Thus, determining a schedule that may decrease the time to perform the operations of a task graph may be difficult.

Some task graphs may include a recurring structure. A recurring structure in a task graph may include a structure that is repeated multiple times in the task graph. For example, a task graph for machine learning algorithms may have a recurring structure because training on individual samples may include similar operations that may be performed in parallel. In some embodiments, a schedule for performing operations may be determined for a group of the recurring structures and a group of resources. A number of the recurring structures in the group of recurring structures may be selected based on the number of the recurring structures resulting in a pipeline-like schedule for performing the operations using the group of resources that reduces the time to perform the operations collectively. The schedule may then be sequentially repeated for other groups of the recurring structures using the same group of resources. By repeating the schedule for multiple groups of the recurring structures, a total time for performing the operations of the task graph may be reduced as compared to other methods. In some embodiments, a total time for performing the operations of a task graph, when sequentially repeating performance of groups of recurring structures, may be asymptotically close to a minimum time to perform the operations of the task graph.

As such, according to one or more embodiments of the present disclosure, the operations described herein allow for an improvement in scheduling performance of operations of a task graph. The improvement in scheduling performance of operations of a task graph may result in better usage of resources, such as devices and/or systems, which may be performing the operations of the task graph. Alternatively or additionally, the improvement in scheduling performance of operations of a task graph may reduce a time for resources to perform the operations of the task graph. Alternatively or additionally, the improvement in scheduling performance of operations of a task graph may increase performance of resources that are performing the operations of the task graph. For example, improvement in scheduling performance of operations of a task graph for a machine learning algorithm may decrease latency and time for computer systems, such as servers, to train a machine learning model. Alternatively or additionally, improvement in scheduling performance of operations of a task graph for a machine learning algorithm may increase a number of inputs that may be used when generating a machine learning model, such that the machine learning model may be improved. Thus, embodiments disclosed herein may solve problems in the technical field of machine learning, scheduling of resources for large operations, such as task graphs, and usage of computing system resources. Furthermore, embodiments disclosed herein may decrease processing time of and latency along computing system resources working to perform operations.

Embodiments of the present disclosure are explained with reference to the accompanying drawings.

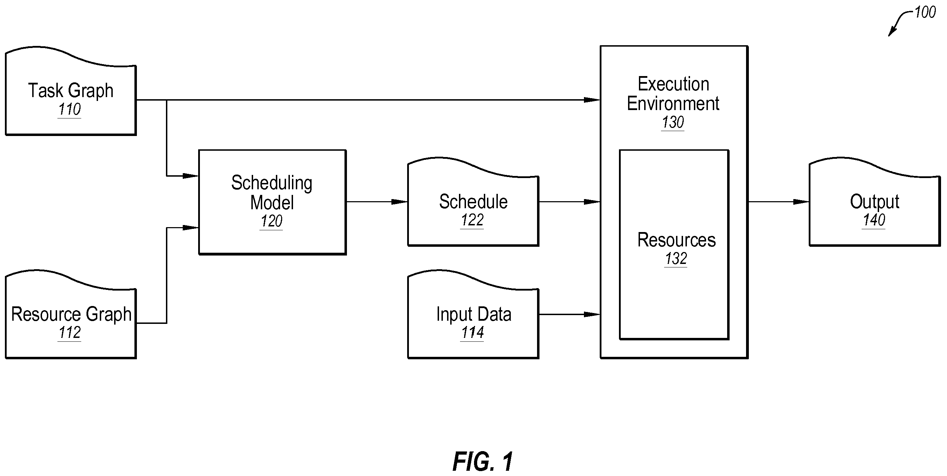

FIG. 1 is a diagram representing an example environment 100 related to scheduling task graph operations, arranged in accordance with at least one embodiment described in the present disclosure. The environment 100 may include a scheduling module 120 and an execution environment 130.

The scheduling module 120 and/or the execution environment 130 may include code and routines configured to enable one or more computing devices or systems to perform one or more of the operations described therewith. In these and other embodiments, the scheduling module 120 and/or the execution environment 130 may be implemented using hardware including any number of processors, microprocessors (e.g., to perform or control performance of one or more operations), field-programmable gate arrays (FPGAs), application-specific integrated circuits (ASICs) or any suitable combination of two or more thereof. Alternatively or additionally, the scheduling module 120 and the execution environment 130 may be implemented using a combination of hardware and software. In the present disclosure, operations described as being performed by the scheduling module 120 and the execution environment 130 may include operations that the scheduling module 120 and the execution environment 130 may direct a corresponding system to perform.

In some embodiments, the environment 100 may receive as inputs a task graph 110 and a resource graph 112. The task graph 110 may represent operations and the flow of data between the operations to complete a particular function. For example, the vertices of the task graph 110 may represent operations and the edges of the task graph 110 may represent a data flow between the operations. The resource graph 112 may represent resources 132 in the execution environment 130 that may be used to perform the operations in the task graph 110. The vertices of the resource graph 112 may represent the resources 132 and the edges of the resource graph 112 may represent physical connections between the resources 132 and data transfer speeds along the physical connections.

In some embodiments, a resource represented in the resource graph 112 may represent a physical device configured to perform some part of, all of, or multiple of the operations in the task graph 110 based on inputs from the task graph. Using the inputs and operations as defined in the task graph 110, the resources may generate outputs for the operations in the task graph 110.

In these and other embodiments, a resource represented in the resource graph 112 may include a computing unit. For example, the computing unit may include a central processing unit (CPU), graphics processing unit (GPU), a processor, a processor core of a multi-core processor, an FPGA, an ASIC, or other combination of hardware elements. In these and other embodiments, a single device may include multiple computing units and thus multiple resources. Alternatively or additionally, a resource represented in the resource graph 112 may include a device. The device may include a computing system, such as a combination of processor and memory, such as a mobile device, server, personal computer, among other devices.

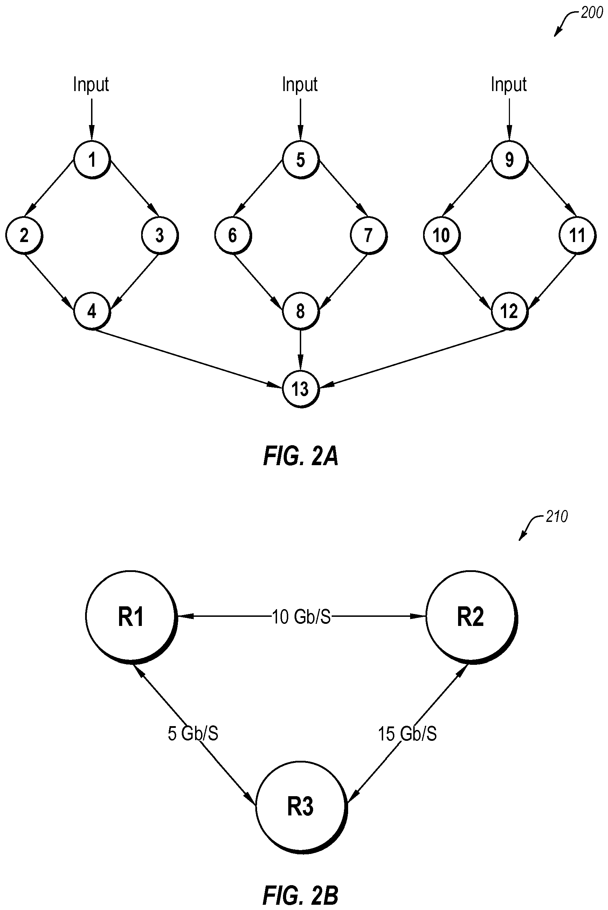

FIG. 2b illustrates an example resource graph 210, according to at least one embodiment of the present disclosure. The resource graph 210 may include three vertices that may represent resource R1, R2, and R3. The edges between the vertices may illustrate network connections between the resource and thus which resource may communicate with other of the resource. As illustrated, each of the resource may communicate with the other resources. However, in some resource graphs, each of the resources may not be interconnected.

In some embodiments, the edges may also include information regarding the speed of the network connection between the resources. As illustrated, the network connection between the resource R1 and resource R2 may be 10 GB/s. The network connection between the resource R2 and resource R3 may be 15 GB/s and the network connection between the resource R1 and resource R3 may be 5 GB/s. As illustrated, the network connections are all different. Alternatively or additionally, each of the network connections may be the same or some of the network connections may be the same and others may be different.

In some embodiments, the resource graph 210 may also include information regarding performance of operations in a task graph with respect to the resources in the resource graph 210. For example, the resource graph 210 may include information regarding a time for each of the resources in the resource graph 210 to perform each of operations in the task graph. Alternatively or additionally, the resource graph 210 may include information regarding a memory amount for each of the resources and a memory requirement for each of the resources in the resource graph 210 to perform each of the operations in the task graph.

In some embodiments, the information in the resource graph 210 may be used to determine a total processing time for the task graph. Alternatively or additionally, the information in the resource graph 210 may be used to determine scheduling of operations in a task graph for processing using the resources in the resource graph 210. In these and other embodiments, scheduling of operations for a task graph may refer to selecting resources that may perform each of the operations in a task graph based on the constraints of the resources in the resource graph 210 and the operational flow of the task graph.

For example, in some embodiments, the resource graph 210 may be used to help determine which resources may perform operations in a task graph. For example, if an operation uses an amount of memory greater than the memory amount for a particular resource, the operation may not be assigned to the particular resource. Alternatively or additionally, if a particular resource is performing a particular operation that uses an amount of memory, the particular resource may not perform other operations during overlapping time intervals that may use amounts of memory that combined with the memory usage of the particular operation are greater than the memory amount of the particular resource.

As another example, in some embodiments, the resource graph 210 may also be used to determine when operations in a task graph that are based on outputs from other operations may begin based on operation times of the resources and network latency between the resources. For example, if the resource R1 performs a first operation and the resource R2 performs a second operation based on outputs from the first operation, the resource graph 210 may be used to determine a time delay for sending the information between the resource R1 and the resource R2 and the time for the resource R1 to perform the first operation. Thus, the resource graph 210 may be used to determine a time when the resource R2 may begin processing the second operation based on the time to perform the first operation by the resource R1 and the network connection between the resource R1 and the resource R2.

Returning to a discussion of FIG. 1, in some embodiments, the task graph 110 may include multiple sub-task graphs. A sub-task graph of a task graph may include multiple vertices of the task graph that are not included in other sub-task graphs of the task graph. In some embodiments, each of the sub-task graphs may include a similar or the same configuration. For example, each of the sub-task graphs may include the same number and arrangement of vertices and each of the vertices may correspond to the same operations such that the sub-tasks graphs may include the same configuration of operations.

In some embodiments, the sub-task graphs may not depend on each other for inputs. In these and other embodiments, the sub-task graphs may be performed in parallel. For example, a portion of the sub-task graphs or all of the sub-task graphs may obtain the inputs from inputs that are independent from operations in the task graph 110 or from another portion of the task graph 110. For example, in some embodiments, each of the sub-task graphs may obtain inputs from a source independent of an operation performed in the task graph 110. Alternatively or additionally, each of the sub-task graphs may obtain inputs from one or more operations performed in the task graph 110 that are not part of the sub-task graphs. In some embodiments, one or more inputs for each of the sub-task graphs may be different. Alternatively or additionally, one or more of the sub-task graphs may have the same inputs.

In some embodiments, sub-task graphs that include the same configuration of operations and that do not depend on each other for inputs may be referred to in this disclosure as recurring sub-task graphs within the task graph 110.

FIG. 2a illustrates an example task graph 200, according to at least one embodiment of the present disclosure. The task graph 200 may include thirteen vertices, labeled 1-13, that represent operations 1-13 that may be performed in the task graph 200. In some embodiments, the operations 1, 5, and 9 may be the same operation, the operations 2, 6, and 10 may be the same operation, the operations 3, 7, and 11 may be the same operation, and the operations 4, 8, and 12 may be the same operation.

The task graph 200 as illustrated may include three sub-task graphs. The first sub-task graph may include operations 1-4. The second sub-task graph may include operations 5-8 and the third sub-task graph may include operations 9-12. Each of the sub-task graphs may obtain an independent input. Alternatively or additionally, each of the sub-task graphs may provide an output to the operation 13. In these and other embodiments, the three sub-task graphs may be recurring sub-task graphs as each sub-task graph may include the same configuration of operations and each sub-task graph does not depend on another of the sub-task graphs for input.

Returning to a discussion of FIG. 1, the task graph 110 and the resource graph 112 may be provided to the scheduling module 120. The scheduling module 120 may be configured to determine a schedule 122 for performing the operations in the task graph 110 by the resources 132 represented in the resource graph 112. The schedule 122 may indicate for each operation a starting time of an operation and which of one or more of the resources 132 may perform the operation. The schedule 122 may also provide a total processing time to process all of the operations in the task graph 110.

In some embodiments, the scheduling module 120 may be configured to determine the schedule 122 such that the schedule 122 reduces the processing time and/or minimizes the time to process all of the operations in the task graph 110 using the resources 132. As indicated previously, for some task graphs, generating a schedule using the task graph 110 and the resource graph 112 may be a NP-complete problem. Thus, generating a schedule using all of the operations in the task graph 110 may be difficult and time consuming. In these and other embodiments, the scheduling module 120 may be configured to determine the schedule 122 based on determine a sub-schedule for some sub-task graphs of the task graph 110 and applying the sub-schedule of the sub-task graphs to other sub-task graphs of the task graph 110 to determine the schedule 122.

In some embodiments, the scheduling module 120 may be configured to determine a sub-schedule by identifying the sub-tasks graphs in the task graph 110. In these and other embodiments, the scheduling module 120 may be configured to identify recurring sub-task graphs that include the same configuration of operations and that do not depend on each other for inputs. After identifying the recurring sub-task graphs, the scheduling module 120 may be configured to determine a number of the recurring sub-task graphs that may be schedule together during a sub-schedule that minimizes or reduces the processing time across the number of the recurring sub-task graphs.

For example, a processing time for one particular recurring sub-task graph, assuming the resources 132 are not performing other operations until the processing of the particular recurring sub-task graph is finished, may be time T1. A processing time for two recurring sub-task graphs, assuming the resources 132 are not performing other operations until the processing of the two recurring sub-task graphs is finished, may be time T2. However, given the configuration of the resources 132 and the nature of pipeline processing across multiple resources, T2 < 2 ^{∗} T1. Thus, scheduling more than one recurring sub-task graph for processing by the resources 132 in overlapping time periods may generate efficiencies. However, at some point, performing scheduling for many recurring sub-task graphs in overlapping time periods may result in an additional increase in the processing time for each recurring sub-task graph.

In some embodiments, to determine a number of the recurring sub-task graphs that may be schedule together during a sub-schedule that minimizes or reduces the processing time across the number of the recurring sub-task graphs, the scheduling module 120 may perform an iterative search for the number of the recurring sub-task graphs to schedule together. To begin, the scheduling module 120 may select an initial number for the number of the recurring sub-task graphs to schedule together. The scheduling module 120 may determine a processing time for the initial number of recurring sub-task graphs based on the resource graph 112. The scheduling module 120 may also be configured to determine a minimum processing time for the initial number of recurring sub-task graphs. The scheduling module 120 may compare the processing time and the minimum processing time to determine a difference between the processing time and the minimum processing time. In response to the difference satisfying a threshold, the scheduling module 120 may select the initial number for the number of the recurring sub-task graphs to schedule together.

In response to the difference between the processing time and the minimum processing time not satisfying the threshold, the scheduling module 120 may select another number of recurring sub-task graphs. The scheduling module 120 may determine a second processing time for the other number of recurring sub-task graphs based on the resource graph 112. The scheduling module 120 may also be configured to determine a second minimum processing time for the other number of recurring sub-task graphs. The scheduling module 120 may determine a second difference between the second processing time and the second minimum processing time. In response to the second difference satisfying the threshold, the scheduling module 120 may select the other number for the number of the recurring sub-task graphs to schedule together. In response to the second difference not satisfying the threshold, the scheduling module 120 may select another number of recurring sub-task graphs and continue iterating as discussed above until the difference between the processing time and the minimum processing time satisfies the threshold.

In some embodiments, the processing time for a particular number of recurring sub-task graphs based on the resource graph 112 may be determined based on a heuristic search for a schedule that reduces and/or minimizes processing time for the particular number of recurring sub-task graphs. The heuristic search may take into account the constraints associated with the task graph 110 and the resource graph 112. In these and other embodiments, any type of heuristic search may be performed. Alternatively or additionally, other types of algorithms may be used to determine the processing time for a particular number of recurring sub-task graphs.

In some embodiments, the minimum processing time for a particular number of recurring sub-task graphs may be based on a parallel performance of all of the operations in the recurring sub-task graphs. For example, the minimum processing time for a particular number of recurring sub-task graphs may be a processing time to process each of the operations when the operations are performed in parallel without the constraints of the task graph 110 and the resource graph 112. Alternatively or additionally, the minimum processing time for a particular number of recurring sub-task graphs may be determined based on a trivial lower bound of time for processing the particular number of recurring sub-task graphs. The trivial lower bound may include a summation of individual processing time for each of the processes in the recurring sub-task graphs divided by the number of processes in the recurring sub-task graphs. In these and other embodiments, the individual processing times may be based on one of the resources 132 performing the processing that performs the processing in the least, the most, an average, or some other amount of time. Alternatively or additionally, the minimum processing time of a particular number of recurring sub-task graphs may be based on other algorithms or techniques such as linear programming relaxations. In these and other embodiments, the minimum processing time may be an estimation of a minimum processing time given the resources 132.

In some embodiments, the scheduling module 120 may determine the difference between the processing time and the minimum processing time by determining a ratio between the processing time and the minimum processing time. The ratio may be compared to the threshold. In these and other embodiments, the threshold may be approximately equal to one.

Alternatively or additionally, the scheduling module 120 may determine the difference between the processing time and the minimum processing time by subtracting the minimum processing time from the processing time. The result of subtracting may be compared to the threshold. In these and other embodiments, the threshold may be approximately equal to zero. Alternatively or additionally, the scheduling module 120 may normalize the processing time and the minimum processing time and subtract the normalized minimum processing time from the normalized processing time. The result of subtracting may be compared to the threshold. In these and other embodiments, the threshold may be approximately equal to zero. Alternatively or additionally, the scheduling module 120 may determine the difference between the processing time and the minimum processing time using some other metric.

The threshold may vary based on the metric used to compare the processing time and the minimum processing time as discussed above. In these and other embodiments, the threshold may be based on an amount of time granted to the scheduling module 120 for determining the schedule 122. The threshold may also be based on a number of operations in the task graph 110. For example, in response to the task graph 110 including more operations, the threshold may be set such that to satisfy the threshold the difference between the processing time and the minimum processing time is reduced as compared to a different threshold. Reducing the difference between processing time and the minimum processing time may reduce the processing time of the task graph 110 in the execution environment 130. Alternatively or additionally, the threshold may be based on a quality of the estimation of the minimum processing time. For example, if the estimation of the minimum processing time is determined to be lower than expected, the threshold may be larger. Alternatively or additionally, the threshold may be variable. In these and other embodiments, when the processing time and the minimum processing time are not converging when the particular number of recurring sub-task graphs increases, the threshold may be adjusted.

In some embodiments, the threshold may be a lower bound, upper bound or range. In these and other embodiments, to satisfy the threshold, the difference between the processing time and the minimum processing time may be within the threshold. For example, if the threshold is a lower bound, the difference between the processing time and the minimum processing time may be lower than the lower bound.

After determining the number of the recurring sub-task graphs that may be schedule together during a sub-schedule, the scheduling module 120 may determine a number of sequential sub-schedules that may be performed to process each of the recurring sub-task graphs. The scheduling module 120 may determine the number by dividing a total number of recurring sub-task graphs by the number of the recurring sub-task graphs that may be schedule together during a sub-schedule and rounding up to the next integer.

In these and other embodiments, the schedule 122 may include multiple sub-schedules during which multiple recurring sub-task graphs may be performed. When the total number of recurring sub-task graphs is integer divisible by the number of the recurring sub-task graphs, each of the multiple sub-schedules may include scheduling for processing an equal number of recurring sub-task graphs. When the total number of recurring sub-task graphs is not integer divisible by the number of the recurring sub-task graphs, each of the multiple sub-schedules may include scheduling for processing an equal number of recurring sub-task graphs except one of the multiple sub-schedules may include scheduling for processing fewer than the number of recurring sub-task graphs.

After determining the number of sequential sub-schedules for the schedule 122, the scheduling module 120 may schedule other processes that may occur before or after the sequential sub-schedules to complete the schedule 122.

In some embodiments, the scheduling module 120 may schedule each of the sequential sub-schedules such that a subsequent sub-schedule does not commence until a current sub-schedule has concluded processing. Alternatively or additionally, the scheduling module 120 may schedule the sequential sub-schedules such that a subsequent sub-schedule commences during the processing of the current sub-schedule. A subsequent sub-schedule commencing during the processing of the current sub-schedule may be referred to as tiling of sub-schedules. In these and other embodiments, one or more constraints may be added to the resource graph 112 to allow for better tiling of sub-schedules. For example, constraints may be added to the resource graph 112 such that the resources that perform a first portion of the operations in the sub-schedule are free to commence operations of a subsequent sub-schedule and are not used to perform operations at the end of the sub-schedule.

In some embodiments, the schedule 122 may include multiple iterations of sequential multiple sub-schedules. For example, the task graph 110 may start with multiple recurring sub-task graphs from which an output is determined. The output may be the basis for other multiple recurring sub-task graphs that may be used to for a final process of the task graph 110. In these and other embodiments, the schedule 122 may include sequential sub-schedules followed by scheduling of operations, followed by other sequential sub-schedules, and concluding with other operations from the task graph 110. The scheduling module 120 may provide the schedule 122 to the execution environment 130.

The execution environment 130 may obtain the schedule 122 and the input data 114. The execution environment 130 may be configured to execute the operations of the task graph 110 using the resources 132 based on the input data 114 according to the schedule 122. The input data 114 may be data for which the operations in the task graph 110 are designed. The execution environment 130 may generate an output 140 based on the execution of the operations of the task graph 110.

An example operation of the environment 100 is now provided. In this example, the task graph 110 may be a task graph of a machine learning algorithm for generating a machine learning model. The task graph 110 may be generated using known software techniques, such as those used by TensorFlow and ONNX. The input data 114 may include inputs on which the machine learning model may be built. The input data 114 may further include labels for each of the inputs. For example, the inputs may be images and the labels maybe a description of what is included in the image. The input data 114 may further include an initial value for parameters used by the machine learning algorithm.

The task graph 110 of the machine learning algorithm may include multiple recurring sub-task graphs, such as one million recurring sub-task graphs. In these and other embodiments, each of the inputs, labels, and associated parameters for an input may be associated with one recurring sub-task graph. Thus, the task graph 110 may begin with multiple recurring sub-task graphs. Each of the recurring sub-task graphs may include similar operations for generating outputs. In some embodiments, the operations may include instant update or batch update of the parameters. In these and other embodiments, the outputs of the recurring sub-task graphs may be combined, such as averaged, to generate the weighted parameters that may be used in the machine learning model.

The scheduling module 120 may determine based on the resource graph 112 that the number of recurring sub-task graphs for a sub-schedule is eighteen. Thus, the scheduling module 120 may schedule 55,555 sub-schedules that process the operations of eighteen recurring sub-task graphs to be performed sequential to process 999,990 of the recurring sub-task graphs. The scheduling module 120 may also schedule a sub-schedule that processes the remaining ten recurring sub-task graphs. Alternatively or additionally, the scheduling module 120 may determine a schedule for processing the remaining ten recurring sub-task graphs and other operations of the task graph 110. The scheduling module 120 may provide the schedule 122 to the execution environment 130.

The execution environment 130 may follow the schedule 122 and use the task graph 110 and the input data 114 to generate a machine learning model. The machine learning model may be configured to classify unknown inputs based on the training using the input data 114. For example, the machine learning model when trained on images of animals may identify an image of an unknown animal. In these and other embodiments, using the methods and/or systems described in this disclosure may allow for larger sizes of images to be used for the machine learning models. Before the current method, larger size images may have increased the processing such that it was impractical to use in training a machine learning model. However, by scheduling as discussed in this disclosure and having the ability to use multiple resources to process an image, larger image sizes may be used to train a machine learning model.

The environment 100 may be used other purposes than for scheduling and processing of machine learning algorithms. For example, the environment 100 may be used to process deep convolutional neural networks (CNNs), recurrent neural nets (RRN), variations of CNN, RRN, fully connected networks, other deep architectures that may include recurring sub-task graphs in a task graph. As another example, the environment 100 may be used for processing computer vision applications. The computer vision applications may include recurring sub-task graphs that may be scheduled in a manner described in this disclosure.

Modifications, additions, or omissions may be made to FIG. 1 without departing from the scope of the present disclosure. For example, the environment 100 may include more or fewer elements than those illustrated and described in the present disclosure.

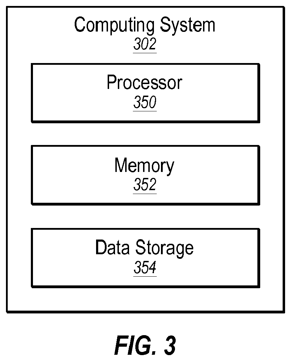

FIG. 3 illustrates a block diagram of an example computing system 302 configured to solve lattice related problems, according to at least one embodiment of the present disclosure. The computing system 302 maybe configured to implement or direct one or more operations associated with a scheduling module (e.g., the scheduling module 120 of FIG. 1) and/or an execution environment (e.g., the execution environment 130 of FIG. 1). In some embodiments, the computing system 302 may be included in or form part of an annealing system. The computing system 302 may include a processor 350, a memory 352, and a data storage 354. The processor 350, the memory 352, and the data storage 354 may be communicatively coupled.

In general, the processor 350 may include any suitable special-purpose or general-purpose computer, computing entity, or processing device including various computer hardware or software modules and may be configured to execute instructions stored on any applicable computer-readable storage media. For example, the processor 350 may include a microprocessor, a microcontroller, a digital signal processor (DSP), an application-specific integrated circuit (ASIC), a Field-Programmable Gate Array (FPGA), or any other digital or analog circuitry configured to interpret and/or to execute program instructions and/or to process data. Although illustrated as a single processor in FIG. 3, the processor 350 may include any number of processors configured to, individually or collectively, perform or direct performance of any number of operations described in the present disclosure. Additionally, one or more of the processors may be present on one or more different electronic devices, such as different servers.

In some embodiments, the processor 350 may be configured to interpret and/or execute program instructions and/or process data stored in the memory 352, the data storage 354, or the memory 352 and the data storage 354. In some embodiments, the processor 350 may fetch program instructions from the data storage 354 and load the program instructions in the memory 352. After the program instructions are loaded into memory 352, the processor 350 may execute the program instructions.

The memory 352 and the data storage 354 may include computer-readable storage media for carrying or having computer-executable instructions or data structures stored thereon. Such computer-readable storage media may include any available non-transitory media that may be accessed by a general-purpose or special-purpose computer, such as the processor 350. By way of example, and not limitation, such computer-readable storage media may include tangible or non-transitory computer-readable storage media including Random Access Memory (RAM), Read-Only Memory (ROM), Electrically Erasable Programmable Read-Only Memory (EEPROM), Compact Disc Read-Only Memory (CD-ROM)or other optical disk storage, magnetic disk storage or other magnetic storage devices, flash memory devices (e.g., solid state memory devices), or any other non-transitory storage medium which may be used to carry or store particular program code in the form of computer-executable instructions or data structures and which may be accessed by a general-purpose or special-purpose computer. In these and other embodiments, the term "non-transitory" as explained in the present disclosure should be construed to exclude only those types of transitory media that were found to fall outside the scope of patentable subject matter in the Federal Circuit decision of In re Nuijten, 500 F.3d 1346 (Fed. Cir. 2007). Combinations of the above may also be included within the scope of computer-readable media.

Combinations of the above may also be included within the scope of computer-readable storage media. Computer-executable instructions may include, for example, instructions and data configured to cause the processor 350 to perform a certain operation or group of operations.

Modifications, additions, or omissions may be made to the computing system 302 without departing from the scope of the present disclosure. For example, in some embodiments, the computing system 302 may include any number of other components that may not be explicitly illustrated or described.

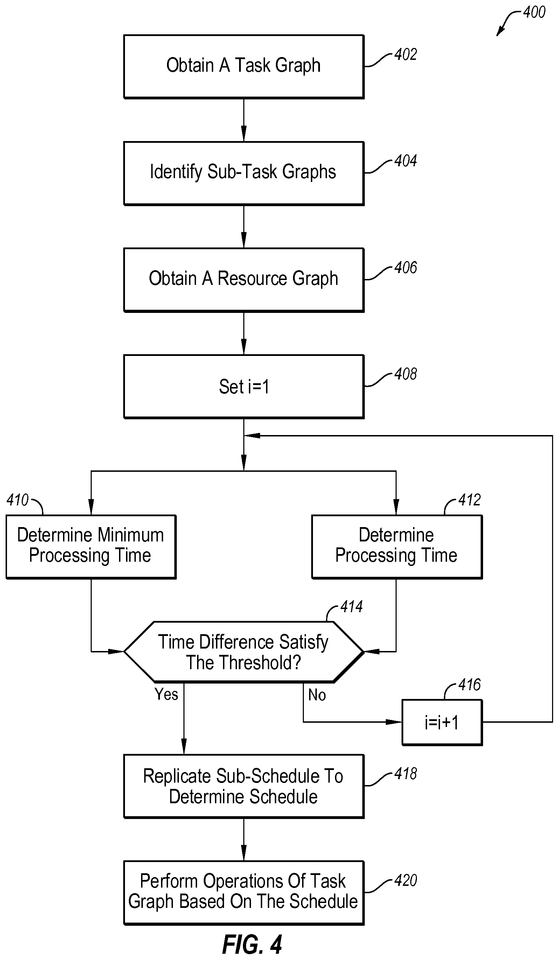

FIG. 4 is a flowchart of an example method 400 of scheduling task graph operations, according to at least one embodiment described in the present disclosure. The method 400 may be performed by any suitable system, apparatus, or device. For example, one or more operations of the method 400 may be performed by one or more elements of the environment 100 of FIG. 1 or by the computing system 302 of FIG. 3 or multiples of the computing system 302 of FIG. 3. Although illustrated with discrete blocks, the steps and operations associated with one or more of the blocks of the method 400 may be divided into additional blocks, combined into fewer blocks, or eliminated, depending on the particular implementation.

The method 400 may begin at block 402, where a task graph may be obtained. At block 404, sub-task graphs within the task graph may be identified. In some embodiments, recurring sub-task graphs may be identified. In these and other embodiments, a number of the recurring sub-task graphs may be determined. Alternatively or additionally, operations to be performed to allow performance of the recurring sub-task graphs may be determined. For example, the task graph may include a multi-input training task graph for training a machine learning model with respect to N number of inputs. The sub-task graphs may include a single input training task graphs for training a machine learning model with respect to one input of the N number of inputs. In these and other embodiments, the sub-task graph may include two input nodes including the input and a label for the input. The sub-task graph may also include M number of model leaf nodes for the parameters of the machine learning model, M number of output leaf nodes for the parameter weights of the machine learning model based on the input, and 2M + 1 task non-leaf nodes for operations to determine the parameter weights. Each of the non-leaf nodes may represent a task in the sub-task graph.

In these and other embodiments, the task graph may include N copies of the sub-task graph followed by nodes to perform averaging of the parameter weights from each sub-task graph. As a result, the task graph may include 2N number of input leaf nodes, M number of model leaf nodes, M output lead nodes that are an average of the parameter weights from each of the N copies of the sub-task graphs, and N(2M+1) task non-leaf nodes. Each of the non-leaf nodes may represent a task in the task graph.

At block 406, a resource graph may be obtained. The resource graph may indicate resources that may be used to perform the operations included in the task graph. The resource graph may include additional information, such as processing times and memory usage for the resources when performing the operations in the task graph and a time to communicate outputs of tasks between devices.

At block 408, a counter i may be set to 1. In these and other embodiments, the counter i may be set to another integer number. For example, the counter i may be set to five, ten, twenty, thirty, or some other number. In some embodiments, the number may be selected based on factors regarding the size of the task graph.

At block 410, a minimum processing time may be determined for a sub-schedule for processing recurring sub-task graphs using the resource graph based on a number of recurring sub-task graphs to be included being equal to i. In some embodiments, the sub-schedule may include a schedule of resources from the resource graph to perform the operations of the number i of recurring sub-task graphs in a pipeline like fashion. The minimum processing time may be based on parallel processing of each of the operations of the i number of recurring sub-task graphs. For example, suppose that the sub-task graphs represent single input training task graphs for training a machine learning model. As a result, a minimum processing time may be determined for i number of sub-task graphs. The i number of sub-task graphs may include 2i number of input leaf nodes, M number of model leaf nodes, M number of output leaf nodes, and i(2M+1) number of non-leaf nodes. Thus, the i number of sub-task graphs may include i(2M+1) number of tasks.

The minimum processing time may be an estimate to perform the tasks of the i number of sub-task graph in parallel. For example, a minimum individual processing time for each of the i(2M+1) number of tasks may be determine when the processing is performed individually by one of the resources in the resource graph. The minimum individual processing time for each of the tasks may be summed and divided by the i(2M+1) number of tasks. Note that the minimum individual processing time may be an estimation of a minimum processing time for the i number of sub-task graphs.

At block 412, a processing time may be determined for the sub-schedule for processing recurring sub-task graphs using the resource graph based on a number of recurring sub-task graphs being equal to i. The processing time may be determined based on a heuristic search for a sub-schedule that reduces and/or minimizes processing time for the i number of recurring sub-task graphs that may take into account the constraints associated with the task graph and the resource graph.

For example, suppose that the sub-task graphs represent single input training task graphs for training a machine learning model. As a result, a processing time may be determined for i number of sub-task graphs. The i number of sub-task graphs may include 2i number of input leaf nodes, M number of model leaf nodes, M number of output leaf nodes, and i(2M+1) number of non-leaf nodes. Thus, the i number of sub-task graphs may include i(2M+1) number of tasks.

The processing time determined may be a minimum or reduced processing time for the resources in the resource graph to process the i number of sub-task graphs. In these and other embodiments, the processing time may be determined by mapping every one of the i(2M+1) number of tasks in the i number of sub-task graphs as described above to a device in the resource graph and include a starting time for each task. The resource graph may be constructed based on the constraints that at every time step a total memory for all tasks being executed on a device is less than a total memory of the device and all inputs for a task are available at the device when the device begins to perform the task with the goal to reduce or minimize the processing time to perform the i(2M+1) number of tasks in the i number of sub-task graphs.

At block 414, it may be determined if a difference between the minimum processing time and the processing time satisfies a threshold. When the difference does not satisfy the threshold, the method 400 may proceed to block 416. When the difference does satisfy the threshold, the method 400 may proceed to block 418. For example, the difference between the processing time and the minimum processing time may include determining a ratio between the processing time and the minimum processing time. In response to the ratio being within the range of 0.8 to 1.2, the difference may satisfy the threshold.

At block 416, the count of i may be adjusted, such as being increased by one. In some embodiments, the count may be increased by an integer greater than one, such as two, three, five, ten, or twenty among others. Alternatively or additionally, the count may be decreased by an integer. Whether the count is increased or decreased may depend on a current value of i and a value of one or more previous changes to the count of i. The block 416 may be followed by blocks 410 and 412. The blocks 410, 412, 414, and 416 may be repeated until the difference between the minimum processing time and the processing time satisfies the threshold.

At block 418, the sub-schedule may be replicated to determine a schedule for performing the operations of the task graph. In some embodiments, the sub-schedule may be replicated by sequentially applying the sub-schedule in the schedule to schedule operations for the majority of the recurring sub-task graphs. For example, assume the task graph may include a multi-input training task graph for training a machine learning model with respect to N number of inputs. The sub-schedule may represent a schedule for the resources of the resource graph to process i number of sub-task graphs of the task graph. In these and other embodiments, the sub-schedule maybe performed N/i number of times and each sub-schedule may process a different one of N/i number of groups of sub-task graphs where each group of the sub-task graphs include i number of sub-task graphs. In some embodiments, the sub-schedules of the groups of sub-task graphs may be configured such that the processing of the groups of sub-task graphs may be tiled such that the processing of each group of sub-task graphs begins before the termination of processing of a directly previous group of sub-task graphs.

At block 420, the operations of the task graph may be performed according to the schedule determined in block 418 using the resources in the resource graph.

Modifications, additions, or omissions may be made to the method 400 without departing from the scope of the present disclosure. For example, the operations of method 400 may be implemented in differing order. Additionally or alternatively, two or more operations may be performed at the same time. Furthermore, the outlined operations and actions are only provided as examples, and some of the operations and actions may be optional, combined into fewer operations and actions, or expanded into additional operations and actions without detracting from the essence of the disclosed embodiments. For example, the method 400 may further include adjusting the resource graph to provide for better tiling between the sub-schedules.

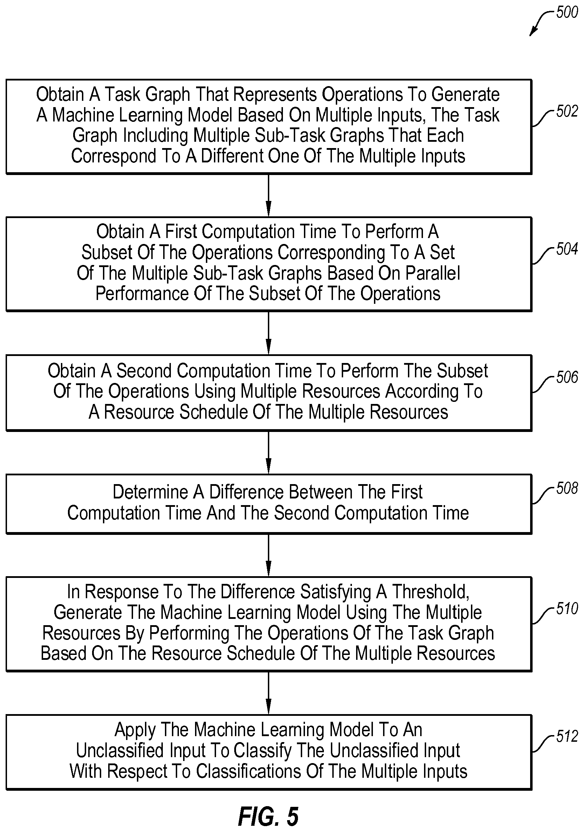

FIG. 5 is a flowchart of another example method 500 of scheduling task graph operations, according to at least one embodiment described in the present disclosure. The method 500 may be performed by any suitable system, apparatus, or device. For example, one or more operations of the method 500 may be performed by one or more elements of the environment 100 of FIG. 1, by the computing system 302 of FIG. 3, or multiples of the computing system 302 of FIG. 3. Although illustrated with discrete blocks, the steps and operations associated with one or more of the blocks of the method 500 may be divided into additional blocks, combined into fewer blocks, or eliminated, depending on the particular implementation.

The method 500 may begin at block 502, where a task graph that represents operations to generate a machine learning model based on multiple inputs may be obtained. In some embodiments, the task graph may include multiple sub-task graphs that each correspond to a different one of the multiple inputs.

At block 504, a first computation time to perform a subset of the operations corresponding to a set of the multiple sub-task graphs based on parallel performance of the subset of the operations may be obtained. In some embodiments, each set of the multiple sets may include the same number of the multiple sub-task graphs. Alternatively or additionally, each of the multiple sub-task graphs may include the same configuration of the subset of the operations.

At block 506, a second computation time to perform the subset of the operations using multiple resources according to a resource schedule of the multiple resources may be obtained. At block 508, a difference between the first computation time and the second computation time may be determined.

At block 510, in response to the difference satisfying a threshold, the machine learning model may be generated using the multiple resources by performing the operations of the task graph based on the resource schedule of the multiple resources.

At block 512, the machine learning model may be applied to unclassified input to classify the unclassified input with respect to classifications of the multiple inputs. In some embodiments, performing the operations of the task graph based on the resource schedule of the multiple resources may include sequentially performing the subset of the operations for each of a multiple sets. In these and other embodiments, each of the multiple sets may include a different portion of the multiple sub-task graphs. In these and other embodiments, each sequential performance of the subset of the operations may be performed according to the resource schedule of the multiple resources.

In some embodiments, the performance of the subset of the operations for a second set of the multiple sets may begin before performance of the subset of the operations for a first set of the multiple sets ends where the performance of the subset of the operations for the second set directly follows the performance of the subset of the operations for the first set. Alternatively or additionally, the resource schedule of the multiple resources may be configured to allow the performance of the subset of the operations for the second set of the multiple sets to begin before performance of the subset of the operations for the first set of the multiple sets ends.

Modifications, additions, or omissions may be made to the method 500 without departing from the scope of the present disclosure. For example, the operations of method 500 may be implemented in differing order. Additionally or alternatively, two or more operations maybe performed at the same time. Furthermore, the outlined operations and actions are only provided as examples, and some of the operations and actions may be optional, combined into fewer operations and actions, or expanded into additional operations and actions without detracting from the essence of the disclosed embodiments.

For example, the method 500 may further include obtaining a resource graph that represents a physical configuration of the multiple resources. In some embodiments, the resource schedule of the multiple resources may be based on the resource graph.

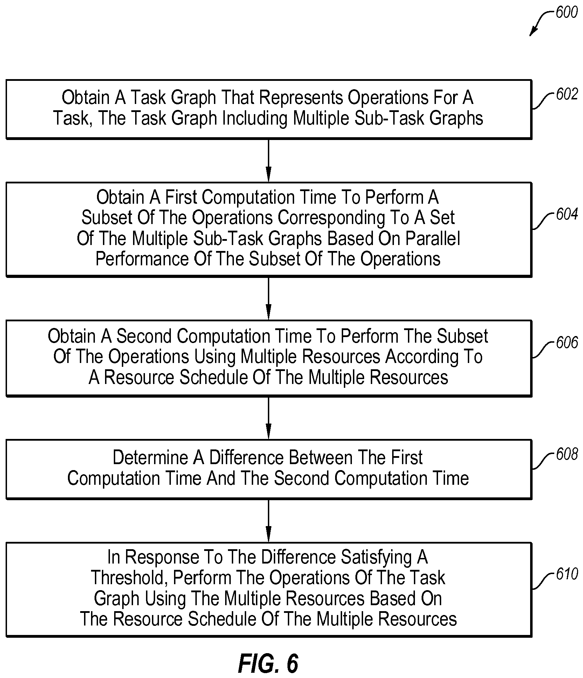

FIG. 6 is a flowchart of another example method 600 of scheduling task graph operations, according to at least one embodiment described in the present disclosure. The method 600 may be performed by any suitable system, apparatus, or device. For example, one or more operations of the method 600 may be performed by one or more elements of the environment 100 of FIG. 1, by the computing system 302 of FIG. 3, or multiples of the computing system 302 of FIG. 3. Although illustrated with discrete blocks, the steps and operations associated with one or more of the blocks of the method 600 may be divided into additional blocks, combined into fewer blocks, or eliminated, depending on the particular implementation.

The method 600 may begin at block 602, at which a task graph that represents operations for a task may be obtained. In some embodiments, the task graph may include multiple sub-task graphs. In some embodiments, each set of the multiple sets may include the same number of the multiple sub-task graphs. In some embodiments, each of the multiple sub-task graphs may include the same configuration of the subset of the operations.

At block 604, a first computation time to perform a subset of the operations corresponding to a set of the multiple sub-task graphs based on parallel performance of the subset of the operations may be obtained.

At block 606, a second computation time to perform the subset of the operations using multiple resources according to a resource schedule of the multiple resources may be obtained. At block 608, a difference between the first computation time and the second computation time may be determined.

At block 610, in response to the difference satisfying a threshold, the operations of the task graph may be performed using the multiple resources based on the resource schedule of the multiple resources. In some embodiments, performing the operations of the task graph based on the resource schedule of the multiple resources may include sequentially performing the subset of the operations for each of multiple sets. In these and other embodiments, each of the multiple sets may include a different portion of the multiple sub-task graphs and each sequential performance of the subset of the operations may be performed according to the resource schedule of the multiple resources. In these and other embodiments, the performance of the subset of the operations for a second set of the multiple sets may begin before performance of the subset of the operations for a first set of the multiple sets ends. In these and other embodiments, the performance of the subset of the operations for the second set may directly follow the performance of the subset of the operations for the first set. In these and other embodiments, the resource schedule of the multiple resources may be configured to allow the performance of the subset of the operations for the second set of the multiple sets to begin before performance of the subset of the operations for the first set of the multiple sets ends.

In some embodiments, the task may include generating a machine learning model based on multiple inputs. In these and other embodiments, each of the multiple sub-task graphs may correspond to one of the multiple inputs and performing the operations may result in generating the machine learning model.

Modifications, additions, or omissions may be made to the method 600 without departing from the scope of the present disclosure. For example, the operations of method 600 may be implemented in differing order. Additionally or alternatively, two or more operations maybe performed at the same time. Furthermore, the outlined operations and actions are only provided as examples, and some of the operations and actions may be optional, combined into fewer operations and actions, or expanded into additional operations and actions without detracting from the essence of the disclosed embodiments. For example, the method 600 may further include obtaining a resource graph that represents a physical configuration of the multiple resources. In these and other embodiments, the resource schedule of the multiple resources may be based on the resource graph.

As indicated above, the embodiments described in the present disclosure may include the use of a special purpose or general purpose computer (e.g., the processor 350 of FIG. 3) including various computer hardware or software modules, as discussed in greater detail below. Further, as indicated above, embodiments described in the present disclosure may be implemented using computer-readable media (e.g., the memory 352 or data storage 354 of FIG. 3) for carrying or having computer-executable instructions or data structures stored thereon.

As used in the present disclosure, the terms "module" or "component" may refer to specific hardware implementations configured to perform the actions of the module or component and/or software objects or software routines that may be stored on and/or executed by general purpose hardware (e.g., computer-readable media, processing devices, etc.) of the computing system. In some embodiments, the different components, modules, engines, and services described in the present disclosure may be implemented as objects or processes that execute on the computing system (e.g., as separate threads). While some of the system and methods described in the present disclosure are generally described as being implemented in software (stored on and/or executed by general purpose hardware), specific hardware implementations or a combination of software and specific hardware implementations are also possible and contemplated. In this description, a "computing entity" may be any computing system as previously defined in the present disclosure, or any module or combination of modulates running on a computing system.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

Terms used in the present disclosure and especially in the appended claims (e.g., bodies of the appended claims) are generally intended as "open" terms (e.g., the term "including" should be interpreted as "including, but not limited to," the term "having" should be interpreted as "having at least," the term "includes" should be interpreted as "includes, but is not limited to," etc.).

Additionally, if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"); the same holds true for the use of definite articles used to introduce claim recitations.

In addition, even if a specific number of an introduced claim recitation is explicitly recited, those skilled in the art will recognize that such recitation should be interpreted to mean at least the recited number (e.g., the bare recitation of "two recitations," without other modifiers, means at least two recitations, or two or more recitations). Furthermore, in those instances where a convention analogous to "at least one of A, B, and C, etc." or "one or more of A, B, and C, etc." is used, in general such a construction is intended to include A alone, B alone, C alone, A and B together, A and C together, B and C together, or A, B, and C together, etc. Additionally, the use of the term "and/or" is intended to be construed in this manner.

Further, any disjunctive word or phrase presenting two or more alternative terms, whether in the description, claims, or drawings, should be understood to contemplate the possibilities of including one of the terms, either of the terms, or both terms. For example, the phrase "A or B" should be understood to include the possibilities of "A" or "B" or "A and B" even if the term "and/or" is used elsewhere.

All examples and conditional language recited in the present disclosure are intended for pedagogical objects to aid the reader in understanding the present disclosure and the concepts contributed by the inventor to furthering the art, and are to be construed as being without limitation to such specifically recited examples and conditions. Although embodiments of the present disclosure have been described in detail, various changes, substitutions, and alterations could be made hereto without departing from the spirit and scope of the present disclosure.

### Statements

Statement 1. A method comprising:
   obtaining a task graph that represents operations to generate a machine learning model based on a plurality of inputs, the task graph including a plurality of sub-task graphs that each correspond to a different one of the plurality of inputs;
   obtaining a first computation time to perform a subset of the operations corresponding to a set of the plurality of sub-task graphs based on parallel performance of the subset of the operations;
   obtaining a second computation time to perform the subset of the operations using a plurality of resources according to a resource schedule of the plurality of resources; determining a difference between the first computation time and the second computation time;
   in response to the difference satisfying a threshold, generating the machine learning model using the plurality of resources by performing the operations of the task graph based on the resource schedule of the plurality of resources; and
   applying the machine learning model to an unclassified input to classify the unclassified input with respect to classifications of the plurality of inputs.
Statement 2. The method of statement 1, wherein performing the operations of the task graph based on the resource schedule of the plurality of resources includes sequentially performing the subset of the operations for each of a plurality of sets, each of the plurality of sets including a different portion of the plurality of sub-task graphs, each sequential performance of the subset of the operations performed according to the resource schedule of the plurality of resources.
Statement 3. The method of statement 2, wherein each set of the plurality of sets includes the same number of the plurality of sub-task graphs.
Statement 4. The method of statement 2 or 3, wherein the performance of the subset of the operations for a second set of the plurality of sets begins before performance of the subset of the operations for a first set of the plurality of sets ends where the performance of the subset of the operations for the second set directly follows the performance of the subset of the operations for the first set.
Statement 5. The method of statement 4, wherein the resource schedule of the plurality of resources is configured to allow the performance of the subset of the operations for the second set of the plurality of sets to begin before performance of the subset of the operations for the first set of the plurality of sets ends.
Statement 6. The method of statement 1-5, wherein each of the plurality of sub-task graphs include the same configuration of the subset of the operations.
Statement 7. The method of statement 1-6, further comprising obtaining a resource graph that represents a physical configuration of the plurality of resources, wherein the resource schedule of the plurality of resources is based on the resource graph.
Statement 8. One or more computer-readable media configured to store instructions that when executed by a system cause or direct the system to perform the method of statement 1-7.
Statement 9. A method comprising:
   obtaining a task graph that represents operations for a task, the task graph including a plurality of sub-task graphs;
   obtaining a first computation time to perform a subset of the operations corresponding to a set of the plurality of sub-task graphs based on parallel performance of the subset of the operations;
   obtaining a second computation time to perform the subset of the operations using a plurality of resources according to a resource schedule of the plurality of resources; determining a difference between the first computation time and the second computation time; and
   in response to the difference satisfying a threshold, performing the operations of the task graph using the plurality of resources based on the resource schedule of the plurality of resources.
Statement 10. The method of statement 9, wherein the task includes generating a machine learning model based on a plurality of inputs where each of the plurality of sub-task graphs correspond to one of the plurality of inputs and performing the operations results in generating the machine learning model.
Statement 11. The method of statement 9-10, wherein performing the operations of the task graph based on the resource schedule of the plurality of resources includes sequentially performing the subset of the operations for each of a plurality of sets, each of the plurality of sets including a different portion of the plurality of sub-task graphs, each sequential performance of the subset of the operations performed according to the resource schedule of the plurality of resources.
Statement 12. The method of statement 11, wherein each set of the plurality of sets includes the same number of the plurality of sub-task graphs.
Statement 13. The method of statement 11-12, wherein the performance of the subset of the operations for a second set of the plurality of sets begins before performance of the subset of the operations for a first set of the plurality of sets ends where the performance of the subset of the operations for the second set directly follows the performance of the subset of the operations for the first set.
Statement 14. The method of statement 13, wherein the resource schedule of the plurality of resources is configured to allow the performance of the subset of the operations for the second set of the plurality of sets to begin before performance of the subset of the operations for the first set of the plurality of sets ends.
Statement 15. The method of statement 9-14, wherein each of the plurality of sub-task graphs include the same configuration of the subset of the operations.
Statement 16. The method of statement 9-14, further comprising obtaining a resource graph that represents a physical configuration of the plurality of resources, wherein the resource schedule of the plurality of resources is based on the resource graph.
Statement 17. A system comprising:
   one or more computer-readable media configured to store instructions;
   one or more processors coupled to the one or more computer-readable media, the one or more processors configured to execute the instructions to cause the system to perform procedures, the procedures comprising:
      obtain a task graph that represents operations for a task, the task graph including a plurality of sub-task graphs;
      obtain a first computation time to perform a subset of the operations corresponding to a set of the plurality of sub-task graphs based on parallel performance of the subset of the operations;
      obtain a second computation time to perform the subset of the operations using a plurality of resources according to a resource schedule of the plurality of resources;
      determine a difference between the first computation time and the second computation time; and
      in response to the difference satisfying a threshold, perform the operations of the task graph using the plurality of resources based on the resource schedule of the plurality of resources.
Statement 18. The system of statement 17, wherein performing the operations of the task graph based on the resource schedule of the plurality of resources includes sequentially performing the subset of the operations for each of a plurality of sets, each of the plurality of sets including a different portion of the plurality of sub-task graphs, each sequential performance of the subset of the operations performed according to the resource schedule of the plurality of resources.
Statement 19. The system of statement 18, wherein the performance of the subset of the operations for a second set of the plurality of sets begins before performance of the subset of the operations for a first set of the plurality of sets ends where the performance of the subset of the operations for the second set directly follows the performance of the subset of the operations for the first set.
Statement 20. The system of statement 17-19, wherein each of the plurality of sub-task graphs include the same configuration of tasks.

## Claims

1. A method comprising:
obtaining a task graph that represents operations for a task, the task graph including a plurality of sub-task graphs;
obtaining a first computation time to perform a subset of the operations corresponding to a set of the plurality of sub-task graphs based on parallel performance of the subset of the operations;
obtaining a second computation time to perform the subset of the operations using a plurality of resources according to a resource schedule of the plurality of resources;
determining a difference between the first computation time and the second computation time; and
in response to the difference satisfying a threshold, performing the operations of the task graph using the plurality of resources based on the resource schedule of the plurality of resources.

2. The method of claim 1, wherein the task includes generating a machine learning model based on a plurality of inputs where each of the plurality of sub-task graphs correspond to one of the plurality of inputs and performing the operations results in generating the machine learning model.

3. The method of claim 2, wherein the method further comprises applying the machine learning model to an unclassified input to classify the unclassified input with respect to classifications of the plurality of inputs.

4. The method of any of claims 1 to 3, wherein performing the operations of the task graph based on the resource schedule of the plurality of resources includes sequentially performing the subset of the operations for each of a plurality of sets, each of the plurality of sets including a different portion of the plurality of sub-task graphs, each sequential performance of the subset of the operations performed according to the resource schedule of the plurality of resources.

5. The method of claim 4, wherein each set of the plurality of sets includes the same number of the plurality of sub-task graphs.

6. The method of claim 4 or 5, wherein the performance of the subset of the operations for a second set of the plurality of sets begins before performance of the subset of the operations for a first set of the plurality of sets ends where the performance of the subset of the operations for the second set directly follows the performance of the subset of the operations for the first set.

7. The method of claim 6, wherein the resource schedule of the plurality of resources is configured to allow the performance of the subset of the operations for the second set of the plurality of sets to begin before performance of the subset of the operations for the first set of the plurality of sets ends.

8. The method of any preceding claim, wherein each of the plurality of sub-task graphs include the same configuration of the subset of the operations.

9. The method of any preceding claim, further comprising obtaining a resource graph that represents a physical configuration of the plurality of resources, wherein the resource schedule of the plurality of resources is based on the resource graph.

10. One or more computer-readable media configured to store instructions that when executed by a system cause or direct the system to perform the method of any preceding claim.

11. A system comprising:
one or more computer-readable media configured to store instructions;
one or more processors coupled to the one or more computer-readable media, the one or more processors configured to execute the instructions to cause the system to perform procedures, the procedures comprising:
obtain a task graph that represents operations for a task, the task graph including a plurality of sub-task graphs;
obtain a first computation time to perform a subset of the operations corresponding to a set of the plurality of sub-task graphs based on parallel performance of the subset of the operations;
obtain a second computation time to perform the subset of the operations using a plurality of resources according to a resource schedule of the plurality of resources;
determine a difference between the first computation time and the second computation time; and
in response to the difference satisfying a threshold, perform the operations of the task graph using the plurality of resources based on the resource schedule of the plurality of resources.

12. The system of claim 11, wherein performing the operations of the task graph based on the resource schedule of the plurality of resources includes sequentially performing the subset of the operations for each of a plurality of sets, each of the plurality of sets including a different portion of the plurality of sub-task graphs, each sequential performance of the subset of the operations performed according to the resource schedule of the plurality of resources.

13. The system of claim 12, wherein the performance of the subset of the operations for a second set of the plurality of sets begins before performance of the subset of the operations for a first set of the plurality of sets ends where the performance of the subset of the operations for the second set directly follows the performance of the subset of the operations for the first set.

14. The system of claim any of claim 11 to 13, wherein each of the plurality of sub-task graphs include the same configuration of tasks.
